# FASCICULE DE BREVET EUROPEEN

(11) **EP 0 593 347 B1**
(45) Date de publication et mention de la délivrance du brevet: **31.01.1996**
(21) Numéro de dépôt: 93402494.4
(22) Date de dépôt: 11.10.1993
(51) Int. Cl.: B64D 1/04, B65H 75/48

(54) **Dispositif de rétraction automatique d'un organe de connexion à un élément séparable ou largable**
Automatische Rückholvorrichtung für eine Verbindung an einem abtrennbaren oder ausklinkbaren Teil
Automatic retraction device for a connector to a separable or releasable element

(30) Priorité: 13.10.1992 FR 9212241
(43) Date de publication de la demande: 20.04.1994
(73) Titulaire: R. ALKAN & Cie., F-94460 Valenton (FR)
(72) Inventeur: Grosselin, Daniel, F-77680 Roissy en Brie (FR)
(74) Mandataire: Hud, Robert

(56) Documents cités:
- FR-A- 2 572 490

## Description

La présente invention concerne un dispositif de rétraction automatique d'un organe de connexion à un élément séparable, notamment d'un connecteur reliant électriquement, à l'avion, une charge emportée sous le pylône d'un avion d'armes.

On sait en effet que les charges emportées sous les pylônes d'avions d'armes sont reliées électriquement à l'avion par un connecteur, lequel est branché manuellement au cours de l'opération d'accrochage de l'emport.

La charge est largable en vol et le connecteur est débranché automatiquement au bout d'une faible course de largage grâce à la traction d'un câble qui lui est fixé. Après la séparation le connecteur doit être "ravalé" dans le pylône (c'est-à-dire se rétracter), grâce au même câble, pour des raisons de furtivité radar et pour qu'il ne soit pas endommagé pendant le vol retour.

Pour répondre aux besoins actuels le dispositif "ravaleur" de câble doit, en plus de sa fonction principale de rétraction automatique du connecteur décrite ci-avant, présenter les caractéristiques suivantes :
a) pour l'opération de branchement du connecteur sur la charge, l'opérateur doit pouvoir tirer sur le câble, le sortir d'une course proche de la course maximum et arriver à une position "armée" où le câble ne doit subir aucun effet de "ravalage" (rétraction). L'opérateur ne doit pas pouvoir trouver d'autre position, même si la première traction appliquée au câble est exagérément forte ;
b) au cours du vol d'emport le câble ne doit en aucun cas tirer sur le connecteur, même avec un faible effort, et doit même présenter un certain "mou" car les petits mouvements dûs aux vibrations pourraient sinon provoquer le débranchement ;
c) le "ravalage" doit être obtenu même si l'effort résistant de débranchement du connecteur est faible (ce qui est le cas par exemple d'un petit connecteur ne comportant que 19 broches), et ce "ravalage" doit être efficace afin de vaincre les efforts aérodynamiques et les efforts de frottement.

Les dispositifs de rétraction actuellement connus ne présentent pas l'ensemble de ces caractéristiques.

Par le brevet français N° 2 579 490 de la même déposante, on connaît un dispositif de ravalage d'un connecteur électrique dans lequel le câble lié au connecteur est fixé sur le tambour d'un treuil, ce tambour étant soumis à un ressort de rappel et étant retenu par un cliquet agissant sur une série de rochets dont le pas est déterminé en fonction des caractéristiques du connecteur. En fin de déroulement du fil une rampe portée par le tambour écarte le cliquet, qui coopère normalement avec les rochets, pour permettre le rappel complet du câble alors qu'en fin de course de rappel le choc d'un butée de retour sur le cliquet replace ce dernier en position active.

Ce dispositif connu ne présente pas la caractéristique a) mentionnée ci-avant , puisqu'une traction sur le câble correspondant à une course pratiquement maximum ne permet pas de placer le dispositif en position armée, et il peut ne pas répondre à la caractéristique b) en ne procurant pas au câble le "mou" souhaitable.

On connait également des dispositifs de rétraction comprenant un piston qui est relié par un câble au connecteur et qui est rappelé en position rétractée par un ressort présentant une force importante pour assurer un ravalage efficace. Un verrou assure l'immobilisation en position armée, alors qu'une traction supplémentaire appliquée au piston annule le verrouillage et permet le retour en position rétractée. Ce dispositif connu ne répond pas à la caractéristique c) mentionnée ci-avant car, compte-tenu de la force du ressort, un faible effort résistant de àébranchement du connecteur ne suffira pas à commander la rétraction.

La présente invention a pour objet de remédier aux inconvénients mentionnés ci-dessus des dispositifs de rétraction connus et elle propose à cet effet un dispositif de rétraction automatique, de fabrication simple et d'utilisation facile, qui permet notamment :
- lors de l'opération de sortie de l'organe mobile du dispositif, d'atteindre une position "armée" unique, dans laquelle ne s'exerce aucun effort de rétraction, même si la course de sortie est voisine de la course maximum,
- lorsque l'organe mobile du dispositif est en position "armée", que celui-ci présente alors un certain "mou" pour éviter l'application accidentelle d'une traction due par exemple à des vibrations,
- d'obtenir le déclenchement de l'action de rétraction même dans le cas ou l'organe mobile du dispositif, en position armée, n'est soumis qu'à un faible effort de commande.

Selon l'invention, le dispositif de rétraction automatique comprend un premier élément mobile relié par un câble à l'organe de connexion et rappelé par un ressort de forte raideur dans une position rétractée, et un moyen d'arrêt immobilisant, à la suite d'une première traction appliquée au câble, ledit premier élément mobile dans une position armée de sortie du câble permettant le branchement dudit organe de connexion sans qu'aucun effort de rétraction s'exerce sur lui, et il se caractérise par un second élément mobile auquel est fixé ledit câble et qui présente un débattement limité par rapport au premier élément mobile, un ressort de faible raideur agissant sur le second élément mobile dans le même sens que le ressort de forte raideur pour rappeler le second élément mobile dans une position rétractée où il engage le premier élément mobile, ledit moyen d'arrêt, sous l'effet d'une seconde traction appliquée au câble agissant sur ledit moyen d'arrêt pour libérer ledit premier élément mobile qui retourne à sa position rétractée sous l'action du ressort de forte raideur.

Avantageusement, le premier élément mobile est constitué par un tambour tournant autour d'un axe et le second élément mobile consiste en un bras pivotant articulé autour dudit axe et se déplaçant dans un alvéole dudit tambour, le moyen d'arrêt étant constitué par un cliquet engageant une saillie du tambour pour immobiliser celui-ci en position armée, alors qu'un poussoir articulé sur le levier pivotant agit sélectivement sur ledit cliquet, lors de la seconde traction appliquée au câble, pour libérer le tambour et permettre le retour de celui-ci dans sa position assurant la rétraction du câble.

On comprend donc que, après une première traction exercée sur le câble, le tambour et le bras pivotant tournent conjointement dans le sens assurant une sortie maximum du câble, le tambour étant immobilisé dans cette position par le cliquet, alors que sous l'action de son ressort le bras pivotant prend sa position rétractée à l'intérieur du tambour, en donnant du mou au câble. Lorsqu'une seconde traction est appliquée au câble à l'occasion du largage de la charge, la rotation du bras pivotant qui en résulte (contre l'action de son faible ressort de rappel) provoque le dégagement du cliquet et le retour en position rétractée de l'ensemble formé par le tambour et le bras pivotant sous l'action du fort ressort de rappel. Ainsi même si, lors du largage, l'effort de débranchement du connecteur est peu important et donc l'effort de traction appliqué au câble est faible, il sera suffisant pour vaincre la force de rappel du bras pivotant et commander le déverrouillage, alors que la force de rétraction, dûe au fort ressort de rappel, sera importante.

Pour bien faire comprendre le dispositif selon l'invention on en décrira ci-après, à titre d'exemple sans caractère limitatif, une forme d'exécution préférée en référence au dessin schématique annexé dans lequel :
la figure 1 est une vue perspective d'un dispositif de rétraction selon l'invention relié à un connecteur électrique utilisable en particulier en aéronautique ;
les figures 2 à 7 sont des vues de côté de l'intérieur du dispositif de la figure 1, représenté dans les positions successives de son cycle de fonctionnement ; et
la figure 8 est une vue en coupe verticale transversale du dispositif de rétraction dans sa position de la figure 6.

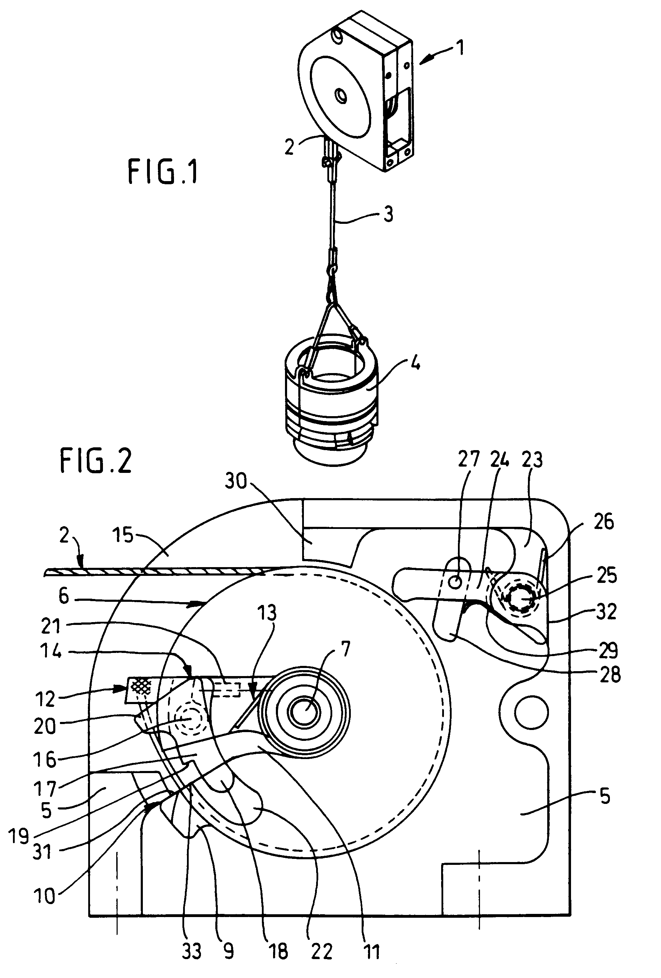

En référence à la figure 1, on a représenté de façon générale en 1 un dispositif rétracteur destiné à être fixé au système d'emport d'un avion d'armes (non représenté). Du dispositif 1 sort un câble 2 relié, par une élingue 3, à un élément de connecteur électrique 4 connu en soi et qui ne sera donc pas décrit en détail. L'élément de connecteur 4 est destiné à engager un élément de connecteur électrique complémentaire (non représenté) lié à une charge suspendue au système d'emport, de façon que l'effet de traction dû au largage de la charge sépare automatiquement les deux éléments de connecteur.

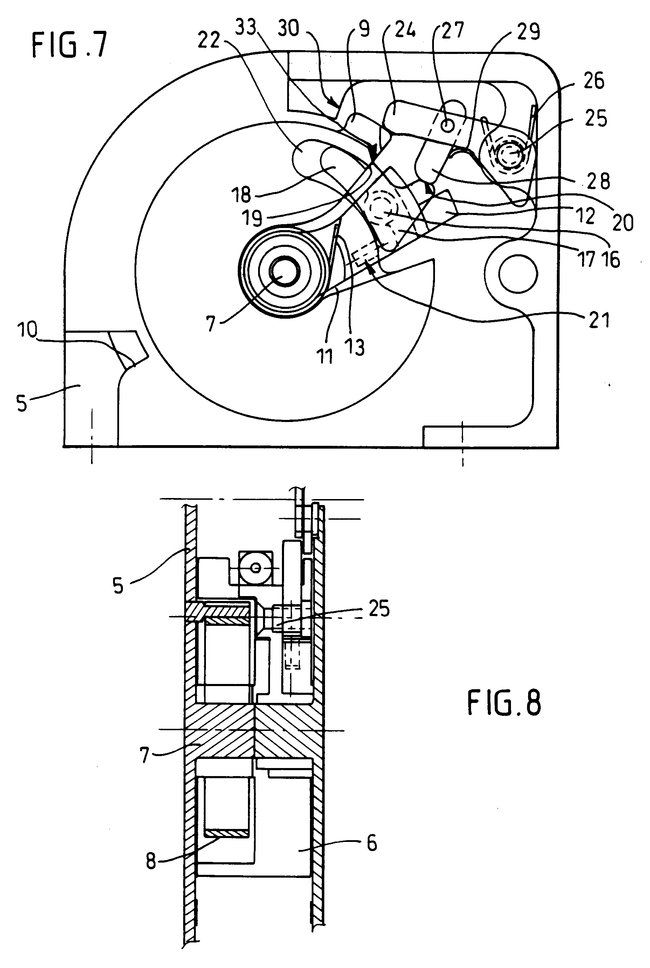

En référence aux figures 2 à 8 on a représenté en 5 le boîtier du dispositif de rétraction 1, à l'intérieur duquel peut tourner un tambour 6 autour d'un axe 7. Un ressort 8 de forte raideur (voir figure 8) agit pour rappeler le tambour 6 dans le sens horaire jusqu'à une position limite, représentée à la figure 2, où une partie en saillie 9 du tambour 6 vient en butée contre un bossage 10 du boîtier 5. Le tambour 6 présente un alvéole 11, à l'intérieur duquel peut se déplacer un bras pivotant 12 également monté en rotation autour de l'axe 7 et rappelé dans le sens horaire, par un ressort de torsion 13 de faible raideur, jusqu'à venir en butée contre un bossage 14 du tambour 6 (position de la figure 2). A l'extrémité extérieure du bras pivotant 12 est fixée une extrémité du câble 2, lequel s'enroule dans le sens anti-horaire sur le tambour 6, sur moins de la circonférence complète de celui-ci, et sort par une ouverture 15 du boîtier 5 pour sa liaison au connecteur 4.

Sur le bras pivotant 12 est articulé, autour d'un axe 16, un levier d'angle 17 présentant à une extrémité une partie effilée 18 se poursuivant par un bec 19 et, vers l'extérieur, un bossage 20. Un ressort 21 agit sur le levier d'angle 17 pour le rappeler dans le sens anti-horaire. L'alvéole 11 du tambour 6 se poursuit par une encoche arquée 22 destinée à recevoir la partie effilée 18 du levier d'angle 17.

Sur une partie intérieure 23 du boîtier 5, en une position à peu près diamétralement opposée par rapport au bossage 10, est articulé un cliquet principal 24 autour d'un axe 25, ce cliquet 24 étant rappelé dans le sens anti-horaire par un ressort 26. Sur cliquet principal 24 est articulé, autour d'un axe 27, un cliquet secondaire 28 poussé dans le sens horaire par un ressort 29 jusqu'à une position de butée représentée à la figure 2. Au delà de la partie 23 de support du cliquet principal 24, le boîtier 6 présente intérieurement un bossage 30.

Le fonctionnement du dispositif est alors le suivant. Le dispositif étant dans la position rétractée représentée à la figure 2, c'est-à-dire le tambour 6 étant rappelé sous l'action du ressort 8 de façon que sa partie saillante 9 engage le bossage 10 du boîtier 5 et le bras pivotant 12 étant rappelé par le ressort 13 en butée contre le bossage 14 du tambour 6, on effectue une première traction sur le câble 2.

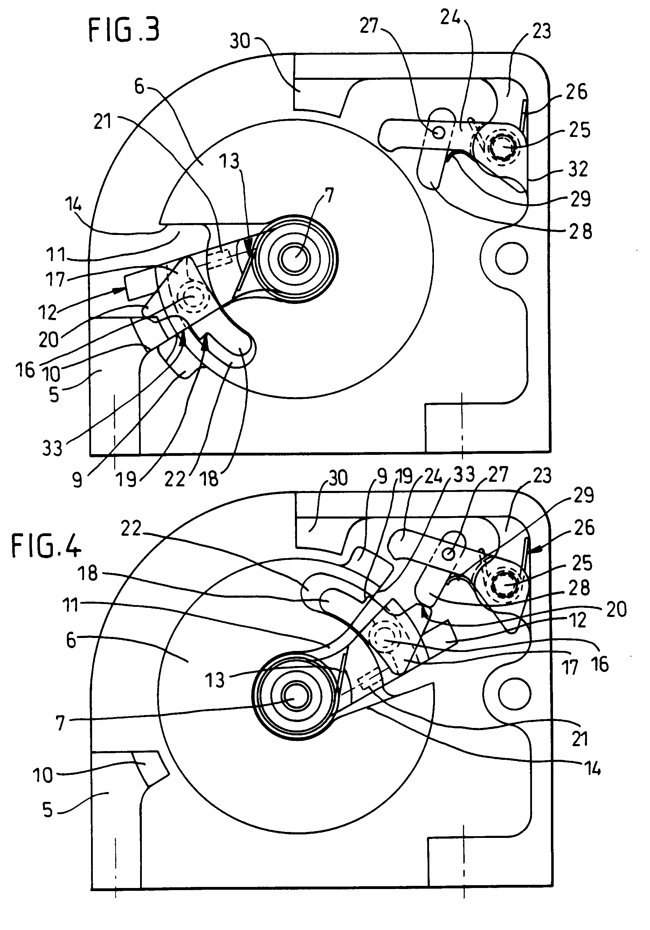

Sous l'effet de cette traction, comme on le voit à la figure 3, le bras pivotant 12 est entraîné en rotation dans le sens anti-horaire, en comprimant le ressort 13 et vient prendre appui sur le bossage 31 du tambour 6. Dans ce mouvement, le levier d'angle 17, ne trouve aucune opposition et reste dans sa position par rapport au bras pivotant 12, grâce à l'action du petit ressort 21, de sorte que le bec 19 du levier d'angle 17, s'engage dans l'encoche arquée 22 du tambour 6 en ne pouvant ensuite plus tourner dans cette première phase de fonctionnement.

La première traction sur le câble se poursuivant (voir figure 4), l'effort de traction sur le câble 2 augmente jusqu'à comprimer le ressort de torsion 8 de forte raideur, le tambour 6 se trouvant alors entraîné en rotation dans le sens anti-horaire.

Le bossage 20 du levier d'angle 17 vient alors prendre appui sur le cliquet secondaire 28 qui, ne pouvant pas tourner dans le sens horaire autour de l'axe 27, provoque un pivotement dans le sens horaire, autour de l'axe 25, de l'ensemble formé par le cliquet principal 24 et le cliquet secondaire 28. La traction sur le câble 2 continue et les deux cliquets 24,28 sont soulevés en comprimant le ressort de rappel 26.

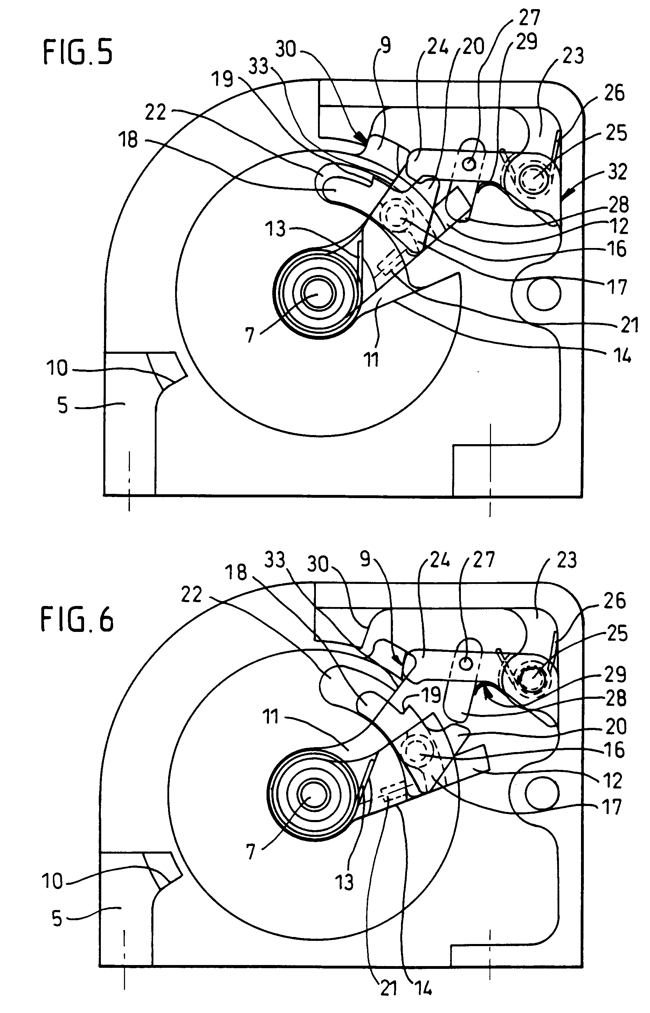

L'effort de traction sur le câble continuant (figure 5), le tambour 6 tourne jusqu'à ce que sa partie saillante 9 engage la butée 30 du boîtier 5, le câble 2 se trouvant alors déroulé à sa valeur maximum. Dans ce même mouvement, le bossage 20 du levier d'angle 17 est passé au-delà du cliquet secondaire 28, l'ensemble des deux cliquets 24,28 étant rappelé en position basse par le ressort 26 jusqu'à la butée 32 sur le boîtier 5.

L'effort de traction sur le câble 2 cesse. Le tambour 6 (figure 6) est entraîné en rotation, dans le sens horaire, par le ressort de torsion de forte raideur 8 jusqu'à ce que sa partie saillante 9 vienne buter contre le cliquet principal 24. Le bras pivotant 12 continue sa rotation dans le sens horaire, sous l'action du ressort 13, jusqu'à engager le bossage 14 du tambour 6. Dans ce mouvement, le bossage 20 du levier d'angle 17 fait tourner le cliquet secondaire 28 dans le sens anti-horaire, et passe ensuite au-delà de ce cliquet 28 qui revient dans sa position sous l'effet du petit ressort 29.

Le dispositif se trouve alors en position armée. Le câble 2, dont on a pu effectuer une traction totale, se trouve entièrement déroulé, rien ne le rappelle et le manipulateur a toute liberté pour brancher le connecteur électrique 4 qui se trouve à son extrémité.

Au moment du largage de la charge, l'effort de débranchement du connecteur 4 provoque une traction sur le câble 2 et (voir figure 7) la rotation, dans le sens anti-horaire, du bras pivotant 12 et la compression du ressort 13. Dans ce mouvement, le bossage 20 du levier d'angle 17 trouve une opposition sur le cliquet secondaire 28. Le petit ressort 21 est alors comprimé et le levier d'angle 17 pivote autour de l'axe 16, le ressort 21 étant beaucoup plus souple que le ressort 26. Le bec 19 du levier d'angle 17 vient prendre appui sur la butée 33 du tambour 6 en empêchant le bras pivotant 12 d'aller jusqu'au bossage 31, de sorte que le cliquet principal 24 reste soulevé et libère la partie saillante 9 du tambour 6.

Suivant l'effort de traction exercé sur le câble, qui correspond à l'effort d'extraction du connecteur 4, deux cas se présentent :
- l'effort est faible (cas par exemple d'un connecteur à 19 broches) et a été juste suffisant pour comprimer partiellement le ressort 13, séparer le cliquet principal 24 de la partie saillante 9 du tambour 6 et comprimer le ressort 26. L'ensemble ne va pas au-delà de la position décrite ci-dessus et revient ensuite à sa position de repos (position de la figure 2) en ravalant le câble 2 et le connecteur 4 qui lui est fixé
- l'effort est important et le tambour 6 tourne, dans le sens anti-horaire, sur un petit secteur angulaire supplémentaire jusqu'à ce que sa partie saillante 9 engage la butée 30 du boîtier 5. Le cliquet principal 24 reste soulevé et l'ensemble revient à sa position de repos.

On constate alors que l'effort de désarmenent du système est faible (essentiellement la compression du ressort 13), et que l'effort de ravalage est important car provoqué par le ressort de torsion de forte raideur 8.

On comprendra que la description ci-dessus a été donnée à simple titre d'exemple, sans caractère limitatif, et que des adjonctions ou des modifications constructives pourraient y être apportées sans sortir du cadre de l'invention telle que revendiquée.

## Revendications

1. Dispositif de rétraction automatique d'un organe de connexion à un élément séparable ou largable, comprenant un premier élément mobile (6) relié par un câble (2) à l'organe de connexion (4) et rappelé par un ressort de forte raideur (8) dans une position rétractée, et un moyen d'arrêt (24) immobilisant, à la suite d'une première traction appliquée au câble (2), ledit premier élément mobile (6) dans une position armée de sortie du câble (2) permettant le branchement dudit organe de connexion (4) sans qu'aucun effort de rétraction s'exerce sur lui, caractérisé par un second élément mobile (12) auquel est fixé ledit câble (2) et qui présente un débattement limité par rapport au premier élément mobile (6), un ressort de faible raideur (13) agissant sur le second élément mobile (12) dans le même sens que le ressort de forte raideur (8) pour rappeler le second élément mobile (12) dans une position rétractée où il engage le premier élément mobile (6), ledit moyen d'arrêt (24), sous l'effet d'une seconde traction appliquée au câble (2), agissant pour libérer ledit premier élément mobile (6) qui retourne à sa position rétractée sous l'action du ressort de forte raideur (8).

2. Dispositif selon la revendication 1, caractérisé en ce que ledit premier élément mobile est constitué par un tambour (6) tournant autour d'un axe (7) et ledit second élément mobile consiste en un bras pivotant (12) articulé autour dudit axe (7) et se déplaçant dans un alvéole (11) dudit tambour (6), le moyen d'arrêt étant constitué par un cliquet (24) engageant une saillie (9) du tambour (6) pour immobiliser celui-ci en position armée, alors qu'un poussoir (17) articulé sur ledit levier pivotant (12) agit sélectivement sur ledit cliquet (24) pour libérer le tambour (6) et permettre le retour de celui-ci en position rétractée.

3. Dispositif selon la revendication 2, caractérisé en ce que ledit poussoir consiste en un levier d'angle (17) dont une branche peut présenter soit une première position angulaire dans laquelle elle s'engage totalement dans une encoche (22) du tambour (6), soit une seconde position angulaire dans laquelle la seconde branche du levier d'angle (17) actionne un cliquet secondaire (28) monté sur ledit cliquet (24) pour déplacer ce dernier dans une position libérant le tambour (6).

4. Dispositif selon la revendication 3, caractérisé en ce qu'un petit ressort (21) agit sur le levier d'angle (17) pour contraindre celui-ci dans sa dite première position angulaire.

5. Dispositif selon la revendication 3 ou la revendication 4, caractérisé en ce que la première branche du levier d'angle (17) présente un bec (19) qui, dans la seconde position angulaire du levier d'angle, engage une butée (33) du tambour (6) maintenant la seconde branche dudit levier d'angle (17) dans sa position de soulèvement du cliquet (24).

6. Dispositif selon l'une quelconque des revendications 3 à 5, caractérisé en ce que le cliquet secondaire (28) est articulé sur le cliquet (24) et est pressé par un ressort (29) contre une butée dudit cliquet (24) de façon à ne pas pouvoir s'effacer lorsque le cliquet secondaire (28) est engagé par le deuxième bras du levier d'angle (17) lors de la rotation du bras pivotant (12) due à la seconde traction exercée sur le câble (2).

7. Dispositif selon la revendication 6, caractérisé en ce que le cliquet (24) est rapellé en position d'arrêt du tambour (6) par un ressort (26) d'une force supérieure à celle du ressort (29) de rappel du cliquet secondaire (28).

8. Dispositif selon l'une quelconque des revendications 2 à 7, caractérisé en ce que le tambour (6) est logé à l'intérieur d'un boîtier (5) sur la paroi intérieure duquel est articulé ledit cliquet (24), la paroi intérieure du boîtier (5) présentant, disposées de façon appropriée, une première butée (10) immobilisant le tambour (6) dans sa position rétractée où le câble (2) est totalement ravalé et une seconde butée (30) limitant la sortie maximum du câble (2).

9. Dispositif selon la revendication 8 caractérisé en ce que, en position totalement rétracté, le câble (2) s'enroule sur la périphérie du tambour (6) sur un peu moins d'un tour.

## Claims

1. Device for the automatic retraction of a member for connection to a separable or releasable element, comprising a first movable element (6) connected to the connection member (4) by a cable (2) and drawn back to a retracted position by a stiff spring (8), and stop means (24) which, as a result of a first pull applied to the cable (2), immobilise the said first movable element (6) in a cocked position for the outlet of the cable (2), allowing the said connection member (4) to be connected without any retraction effort exerted thereon, characterized by a second movable element (12) to which the cable (2) is fixed and which has a limited range of movement in comparison with the first movable element (6), a weak spring (13) acting on the second movable element (12) in the same sense as the stiff spring (8) in order to draw the second movable element (12) back to a retracted position where it engages the first movable element (6), the said stop means (24) acting, under the effect of a second pull applied to the cable (2), to release the said first movable element (6) which returns to its retracted position under the action of the stiff spring (8).

2. Device according to Claim 1, characterized in that the said first movable element is constituted by a drum (6) rotating about an axis (7) and the said second movable element consists of a pivoting arm (12) articulated about the said axis (7) and moving within a cavity (11) of the said drum (6), the stop means being constituted by a pawl (24) engaging a projection (9) of the drum (6) in order to immobilise the drum in the cocked position, a lifter (17) articulated on the pivoting lever (12) acting selectively on the pawl (24) to release the drum (6) and allow it to return to the retracted position.

3. Device according to Claim 2, characterized in that the said lifter consists of an angled lever (17) of which one arm can have either a first angular position in which it is fully engaged in a slot (22) of the drum (6) or a second angular position in which the second arm of the angled lever (17) operates a secondary pawl (28) mounted on the said pawl (24) in order to move the latter to a position releasing the drum (6).

4. Device according to Claim 3, characterized in that a small spring (21) acts on the angled lever (17) in order to restrain it in its said first angular position.

5. Device according to Claim 3 or Claim 4, characterized in that the first arm of the angled lever (17) has a catch (19) which, in the second angular position of the angled lever, engages an abutment (33) of the drum (6) keeping the second arm of the said angled lever (17) in its position for lifting the pawl (24).

6. Device according to any one of Claims 3 to 5, characterized in that the secondary pawl (28) is articulated on the pawl (24) and is pressed against an abutment of the said pawl (24) by a spring (29) so that it cannot move aside when the secondary pawl (28) is engaged by the second arm of the angled lever (17) during the rotation of the pivoting arm (12) due to the second pull exerted on the cable (2).

7. Device according to Claim 6, characterized in that the pawl (24) is drawn back, in the stop position of the drum (6), by a spring (26) with a force greater than that of the spring (29) drawing back the secondary pawl (28).

8. Device according to any one of Claims 2 to 7, characterized in that the drum (6) is housed in a casing (5) to the internal wall of which the said pawl (24) is articulated, the internal wall of the casing (5) having, arranged in a suitable manner, a first abutment (10) immobilising the drum (6) in its retracted position in which the cable (2) is fully retracted, and a second abutment (30) limiting the maximum outlet of the cable (2).

9. Device according to Claim 8, characterized in that, in the fully retracted position, the cable (2) is rolled on the periphery of the drum (6) for a little less than one turn.

## Patentansprüche

1. Automatische Rückholvorrichtung für ein Organ zur Verbindung mit einem abtrennbaren oder abwerfbaren Element mit einem ersten beweglichen Element (6), das durch ein Kabel (2) mit dem Verbindungsorgan (4) verbunden ist und durch eine Feder (8) mit hoher Steifigkeit in eine zurückgeholte Position zurückgestellt wird, sowie einem Sperrelement (24), das infolge einer ersten, auf das Kabel (2) aufgebrachten Zugkraft das erste bewegliche Element (6) in einer gespannten Abführungsposition des Kabels (2) fixiert, womit der Anschluß des Verbindungsorgans (4) möglich wird, ohne daß darauf eine Rückholkraft ausgeübt wird, gekennzeichnet durch ein zweites bewegliches Element (12), an dem das Kabel (2) befestigt ist und das bezüglich des ersten beweglichen Elements (6) einen begrenzten Ausschlag aufweist, wobei eine Feder (13) mit niedriger Steifigkeit auf das zweite bewegliche Element (12) in der gleichen Richtung wie die Feder (8) mit hoher Steifigkeit einwirkt, um das zweite bewegliche Element (12) in eine zurückgeholte Position zurückzustellen, wo es an dem ersten beweglichen Element (6) eingreift, wobei das Sperrmittel (24) unter der Wirkung einer zweiten, an das Kabel (2) angelegten Zugkraft derart wirkt, daß das erste bewegliche Element (6) freigegeben wird, das unter der Wirkung der Feder (8) mit hoher Steifigkeit in seine zurückgeholte Position zurückkehrt.

2. Vorrichtung nach Anspruch 1, dadurch gekennzeichnet, daß das erste bewegliche Element durch eine sich um eine Achse (7) drehende Trommel (6) gebildet ist und das zweite bewegliche Element aus einem Schwenkarm (12) besteht, der um die Achse (7) angelenkt ist und sich in einer Zelle (11) der Trommel (6) verschiebt, wobei das Sperrmittel durch eine Sperrklinke (24) gebildet ist, die an einem Vorsprung (9) der Trommel (6) eingreift, um diese in gespannter Position zu fixieren, während ein an dem Schwenkhebel (12) angelenkter Stößel (17) selektiv auf die Sperrklinke (24) einwirkt, um die Trommel (6) freizugeben und ihre Rückkehr in die zurückgeholte Position zu ermöglichen.

3. Vorrichtung nach Anspruch 2, dadurch gekennzeichnet, daß der Stößel aus einem Winkelhebel (17) besteht, von dem ein Schenkel entweder eine erste Winkelposition, in der er vollständig in eine Nut (22) der Trommel (6) eingreift, oder eine zweite Winkelposition aufweisen kann, in der der zweite Schenkel des Winkelhebels (17) eine an der Sperrklinke (24) angebrachte Sekundärsperrklinke (28) betätigt, um die Sperrklinke in eine die Trommel freigebende Position zu verschieben.

4. Vorrichtung nach Anspruch 3, dadurch gekennzeichnet, daß eine kleine Feder (21) auf den Winkelhebel (17) wirkt, um diesen in die erste Winkelposition zu zwingen.

5. Vorrichtung nach Anspruch 3 oder Anspruch 4, dadurch gekennzeichnet, daß der erste Schenkel des Winkelhebels (17) einen Schnabel (19) aufweist, der in der zweiten Winkelposition des Winkelhebels an einem Anschlag (33) der Trommel (6) eingreift, womit der zweite Schenkel des Winkelhebels (17) in seiner Anhebeposition für die Sperrklinke (24) gehalten wird.

6. Vorrichtung nach einem der Ansprüche 3 bis 5, dadurch gekennzeichnet, daß die Sekundärsperrklinke (28) an die Sperrklinke (24) angelenkt ist und durch eine Feder (29) gegen einen Anschlag der Sperrklinke (24) derart gedrückt wird, daß sie nicht weggeklappt werden kann, wenn die Sekundärsperrklinke (28) durch den zweiten Arm des Hebelwinkels (17) bei der Drehung des Schwenkarms (12) aufgrund der zweiten auf das Kabel (2) ausgeübten Zugkraft in Eingriff gebracht wird.

7. Vorrichtung nach Anspruch 6, dadurch gekennzeichnet, daß die Sperrklinke (24) durch eine Feder (26) in die Sperrposition für die Trommel (6) zurückgestelllt wird, deren Kraft über derjenigen der Feder (29) zum Zurückstellen der Sekundärsperrklinke (28) liegt.

8. Vorrichtung nach einem der Ansprüche 2 bis 7, dadurch gekennzeichnet, daß die Trommel (6) im Inneren eines Gehäuses (5) untergebracht ist, an dessen Innenwand die Sperrklinke (24) angelenkt ist, wobei die Innenwand des Gehäuses (5) in geeigneter Anordnung einen ersten Anschlag (10), der die Trommel (6) in ihrer zurückgeholten Position fixiert, in der das Kabel (2) vollständig eingezogen ist, sowie einen zweiten Anschlag (30) aufweist, der die maximale Abführung des Kabels (2) begrenzt.

9. Vorrichtung nach Anspruch 8, dadurch gekennzeichnet, daß das Kabel (2) in der vollständig zurückgeholten Position am Umfang der Trommel (6) über etwas weniger als eine Windung aufgewikkelt ist.
